# EUROPÄISCHE PATENTANMELDUNG

(11) **EP 3 543 058 A1**
(43) Veröffentlichungstag der Anmeldung: **25.09.2019**
(21) Anmeldenummer: 19164030.9
(22) Anmeldetag: 20.03.2019
(51) Int. Cl.: B60K 17/28

(54) **ZAPFWELLENGETRIEBE**

(30) Priorität: 22.03.2018 DE 122018204405
(71) Anmelder: Deere & Company, Moline, IL 61265 (US)
(72) Erfinder: Lang, Matthias, 68163 Mannheim (DE); Gugel Dr., Rainer, 68163 Mannheim (DE); Müller, David, 68163 Mannheim (DE)
(74) Vertreter: Dehnhardt, Florian Christopher

(57) **Zusammenfassung**

Die Erfindung betrifft eine landwirtschaftliche Arbeitsmaschine (10) mit einem Verbrennungsmotor (40) und einem Nebenabtrieb umfassend mindestens eine Zapfwelle (22). Die Arbeitsmaschine (10) weist eine Anordnung (72) zur dynamischen Anpassung der Drehzahl und des Drehmomentes der Zapfwelle (22) auf. Die Anordnung (72) umfaßt eine elektrische Maschine (98) und ein Getriebe (56), das die Antriebskraft des Verbrennungsmotors (40) und der elektrischen Maschine (98) summiert.

## Beschreibung

Die Erfindung betrifft ein Zapfwellengetriebe, ein landwirtschaftliches Fahrzeug mit einem Zapfwellengetriebe und die Verwendung eines Zapfwellengetriebes.

Landwirtschaftliche Arbeitsmaschinen, wie beispielsweise Traktoren, sind üblicherweise mit einer Zapfwelle zum Antrieb anbaubarer Arbeitsgeräte ausgestattet. Dabei wird ein Teil der Antriebsleistung eines Hauptantriebsmotors des Traktors als Nebenantrieb für die Zapfwelle bereitgestellt (englisch: power take-off oder PTO). Dieser stellt vor allem bei Traktoren eine zumeist zuschaltbare mechanische Antriebsquelle an einem Nebenausgang des Getriebes bereit. Die mechanische Antriebsenergie kann direkt über eine Gelenkwelle genutzt werden um z.B. Ballenpressen, angebaute Mähbalken, Riemengetriebe oder Hydraulikpumpen antreiben.

Bei modernen Traktoren befindet sich die Zapfwelle häufig mittig zwischen dem Dreipunktgestänge am Heck, bei Modellen mit Frontanbauoption auch ergänzend an der Vorderseite.

Wenn die Geräte bei einem stehenden Fahrzeug angetrieben werden sollen, wird zur Steuerung mit dem Gaspedal oder Handgashebel die Drehzahl des Motors und damit die Zapfwellendrehzahl geregelt (Seilwinde, Beregnungsspumpen).

Bei Traktoren dient die Zapfwelle beispielsweise dem Antrieb von Wasserpumpen, Mähmaschinen, Ladewagen und vielen weiteren landwirtschaftlichen Anbaugeräten.

Die Getriebezapfwelle ist über die Fahrkupplung und ein Getriebe mit dem Motor verbunden, die konstanten Nenndrehzahlen sind genormt. Die beiden Standard-Drehzahlen 540/min und 1000/min sind so untersetzt, dass sie im Bereich der Motor-Nenndrehzahl (Höchstleistung) erreicht werden.

Bei üblichen Zapfwellenantriebskonzepten kann der Hauptantriebsmotor beispielsweise über fixe Übersetzungen mit der Zapfwelle verbunden werden. Zur Erzielung einer für das Arbeitsgerät gewünschten Normdrehzahl der Zapfwelle muß der Hauptantriebsmotor dann im Bereich seiner Nenndrehzahl betrieben werden. Folglich gibt die für den Arbeitsprozeß vorgesehene Zapfwellendrehzahl die Drehzahl des Hauptantriebsmotors vor.

Um bei Zapfwellenarbeiten mit geringem Leistungsbedarf mit abgesenkter Dieselmotordrehzahl zu arbeiten und auf diese Weise den Betriebspunkt im Motorkennfeld in Bereiche mit geringerem spezifischen Kraftstoffverbrauch zu verschieben, existieren Konzepte mit entsprechend angepaßter Übersetzung. Abhängig vom jeweiligen Hersteller bzw. der jeweiligen Ausstattung werden so bis zu vier Zapfwellengänge realisiert. Diese lassen sich jedoch nicht unter Last wechseln, so dass diese Konzepte bei Feldarbeiten mit nur zeitweise hohem Leistungsbedarf (z.B. Erntebetrieb mit Ballenpressen) gar nicht genutzt werden können.

Darüber hinaus führt das Anfahren von Anbaugeräten mit hohen Trägheitsmomenten (z.B. Quaderballenpressen) und/oder Lastmomenten (z.B. Futtermischwagen) zu starken Belastungen beim Kupplungsvorgang, da aufgrund der fehlenden Lastschaltbarkeit häufig in einem Zapfwellengang mit einer geringen Übersetzung angefahren werden muß.

Bei Betrieb von Anbaugeräten vor oder hinter landwirtschaftlichen Fahrzeugen mit Zapfwelle ist eine konstante und bestimmte Drehzahl der Zapfwelle nötig. Da die Zapfwelle meist direkt mechanisch mit dem Verbrennungsmotor verbunden ist, ist eine konstante Drehzahl des Motors notwendig. Dies führt wiederum zu Einschränkungen bei Schaltvorgängen und bei der Auslegung des Antriebsstranges.

Aus DE 10 2011 084 623 A1 ist ein Zapfwellengetriebe bekannt, bei dem eine Antriebswelle, sowie zwei damit kuppelbare Eingangswellen koaxial auf einer Achse angeordnet sind, um über verschiedene wählbare Getriebegangstufen, die jeweils durch eine Stirnradpaarung gebildet werden, eine dazu versetzte Zapfwelle anzutreiben. Dieses Zapfwellengetriebe ist zumindest teilweise unter Last schaltbar. Nachteilig ist die verhältnismäßig große axiale Baulänge des Zapfwellengetriebes, bedingt durch die in axialer Richtung nebeneinander angeordneten Stirnradpaarungen für jeweils eine Getriebegangstufe.

Im Stand der Technik sind auch Zapfwellengetriebe bekannt, die als zweistufige Getriebe aus gebildet sind. Häufig erfolgt ein Schalten bei herkömmlichen Zapfwellengetrieben manuell. Dabei ist es meist nicht möglich, das Zapfwellengetriebe unter Last zu schalten.

Aus dem Stand der Technik sind Lösungen bekannt, die eine Abhängigkeit der Zapfwelle von der Motordrehgeschwindigkeit reduzieren. So offenbart DE 26 47 141 A1 einen Antrieb für die Zapfwelle eines landwirtschaftlich nutzbaren Fahrzeugs, wobei die Zapfwelle sowohl mit einer Abtriebswelle für den Fahrzeugantrieb, sowie mit einer unmittelbar mit der Abtriebswelle gekoppelten Welle verbindbar ist. Dementsprechend ist es möglich, die Zapfwelle sowohl mit motorabhängiger Drehzahl als auch mit vortriebsabhängiger Drehzahl zu betreiben. Für den motorabhängigen Betrieb sind zwei Radsätze vorgesehen. Dabei trägt die unmittelbar mit dem Motor gekoppelte Welle zwei Festräder, die mit gleitverschieblich auf einer Eingangswelle des Zapfwellengetriebes gelagerten Stirnrädern nach Wahl in Eingriff gebracht werden können, wenn die se Zahnräder mit einer Klauenkupplung auf die Höhe des zugeordneten Festrades gebracht werden. Die Eingangswelle ist wiederum über eine Lamellenkupplung des Zapfwellengetriebes mit der Zapfwelle verbindbar, wobei die Eingangswelle koaxial zu besagter Zapfwelle vorgesehen ist. Die Klauenkupplung zu dem Ein- bzw. Ausrücken der Stirnräder der beiden Radsätze kann nur lastfrei betätigt werden.

Eine alternative Lösung ist aus DE 20 51 556 C2 bekannt. Eine als Hohlwelle ausgebildete Eingangswelle des Antriebsgetriebes ist mit einer Doppelkupplung verbunden. Diese trägt an gegenüberliegenden Enden Zahnräder von zwei unterschiedlichen Stirnradstufen. Die Zapfwelle erstreckt sich achsparallel zu einer Antriebswelle und einer Vorgelegewelle. Die Festräder Vorlegewelle kämmen mit den über die Doppelkupplung koppelbaren Zahnrädern. Eines der Festräder der Vorgelegewelle kämmt mit einem der Zapfwelle zugeordneten Losrad. Durch Betätigen des Doppelkupplungsgetriebes kann jeweils nach Wahl eines der zugeordneten Zahnräder gekoppelt und das Drehmoment über die Abtriebskonstante zwischen der Zapfwelle und der Vorgelegewelle übertragen werden.

Solche vorbekannte Zapfwellengetriebe können zwar unter Last geschaltet werden. Es handelt sich jedoch um ein zweistufiges Getriebe. Insbesondere der verbrauchsoptimierte Betrieb von landwirtschaftlichen Nutzfahrzeugen mit Zapfwellengetriebe macht es erforderlich, die an der Zapfwelle anliegende Drehzahl in verbesserter Weise auf eine bei einem wirtschaftlichen Betrieb des Antriebsmotors sich ergebende Drehzahl abzustimmen. Dabei erfordern bestimmte landwirtschaftliche Geräte, die über die Zapfwelle angetrieben werden, unterschiedliche Drehzahlbereiche.

Mit Blick auf die unterschiedlichen landwirtschaftlichen Geräte sind die Nenndrehzahlen der Zapfwellen heutzutage genormt. Es haben sich Nenndrehzahlen von 540 Umdrehungen pro Minute, 750 Umdrehungen pro Minute, 1000 Umdrehungen pro Minute und 1400 Umdrehungen pro Minute durchgesetzt (Standard-Übersetzungsstufe). Diese Nenndrehzahlen, auch als Übersetzungsstufen bezeichnet, liegen an der Zapfwelle im Bereich der Motornenndrehzahl (Höchstleistung) an.

Für landwirtschaftliche Geräte mit geringer Leistungsaufnahme ist das Betreiben der Zapfwelle bei Motornenndrehzahl nicht erforderlich. Hierfür haben sich seit einiger Zeit auch Zapfwellengetriebe mit so genannten Economy-Übersetzungsstufen durchgesetzt. Bei den Economy-Übersetzungsstufen 540E und 1000E z. B. liegen Nenndrehzahlen von 540 bzw. 1000 Umdrehungen pro Minute schon bei reduzierter Motorendrehzahl, meist in der Nähe des höchsten Motorendrehmoments, bei ca. 1400 bis 1600 Umdrehungen pro Minute an. Damit ist es möglich, Anbaugeräte mit geringer Leistungsaufnahme bei vermindertem Kraftstoffverbrauch zu betreiben.

Bei nichtlastschaltbaren Zapfwellengetrieben besteht das Problem, dass der Bediener der landwirtschaftlichen Maschine vor Beginn eines Arbeitsganges die entsprechende Über setzungsstufe an dem Zapfwellengetriebe einstellen muß. Handelt es sich bei dieser um eine unter Vollast günstige Übersetzungsstufe, so ergibt sich das Problem, dass im Teillastbereich, eine unpassende Übersetzung bei geringem Drehmoment abgerufen werden muß, was sowohl für den Betrieb des landwirtschaftlichen Gerätes wie auch für den des Motors nachteilig ist.

Heutzutage bekannte Zapfwellengetriebe können meist nicht unter Last in die jeweils zweckmäßigste Übersetzungsstufe geschaltet zu werden. Sowohl eine Lastschaltbarkeit zwischen den einzelnen Übersetzungsstufen (540 Umdrehungen pro Minute, 750 Umdrehungen pro Minute, 1000 Umdrehungen pro Minute, 1400 Umdrehungen pro Minute) als auch eine Lastschaltbarkeit zwischen den Economy-Übersetzungsstufen und den Standard-Übersetzungsstufen oder auch zwischen den Economy-Stufen selbst ist bis heute nicht in ausreichender Weise gegeben.

Die Zapfwellengetriebe verfügen in der Regel über eine hydraulisch betätigbare Kupplung, über welche die Zapfwelle mit der Antriebswelle des Zapfwellengetriebes in Antriebsverbindung gebracht werden kann. Die Antriebswelle steht in der Regel mit dem Antriebsmotor des Fahrzeugs oder mit einem mit dem Antriebsmotor in Verbindung stehenden Antriebsstrang in Verbindung. In EP 2 586 641 B1 wird Zapfwellengetriebe mit einer Zapfwellenkupplung beschrieben. Ein Kupplungsscheibenpaket steht mit einem Hydraulikreservoir in Verbindung steht,
DE 10 2011 084 622 A1 beschreibt ein Zapfwellengetriebe, mit einer ersten und einer zweiten Eingangswelle, die konzentrisch zueinander angeordnet sind. Eine der Eingangswellen ist als Hohlwelle ausgebildet. Die andere Eingangswelle durchsetzt diese. Die Eingangswellen sind über eine Doppelkupplungseinrichtung koppelbar.

In der EP 2 628 625 B1 wird Traktor mit einem Hauptmotor und einem Zapfwellengetriebe beschreiben. Eine Welle umfaßt einen ersten und einen zweiten Wellenabschnitt, die lösbar verbunden sind. Im voneinander gelösten Zustand ist wenigstens der erste in eine Trennstellung axial verschiebbar, so dass er von dem zweiten Wellenabschnitt durch einen Spalt getrennt ist. Der erste Wellenabschnitt weist einen verjüngten Bereich auf.

Aufgabe der Erfindung ist es, eine landwirtschaftliche Arbeitsmaschine mit einer Zapfwelle bereitzustellen, die keine Einschränkungen bei Schaltvorgängen aufweist. Die Erfindung soll eine flexible Auslegung des Antriebsstranges ermöglichen. Die Arbeitsmaschine soll flexibel an die jeweiligen Leistungsanforderungen anpaßbar sein. Zudem soll sich die Arbeitsmaschine durch eine hohe Lebensdauer sowie eine geringe Störanfälligkeit auszeichnen. Die Sicherheit beim Betrieb soll gegenüber herkömmlichen Arbeitsmaschinen gesteigert werden. Die Konstruktion soll preiswert zu fertigen sein und möglichst geringe Betriebskosten verursachen.

Diese Aufgabe wird erfindungsgemäß durch eine landwirtschaftliche Arbeitsmaschine gemäß dem Hauptanspruch, ein Zapfwellengetriebe und eine Verwendung gemäß den Nebenansprüchen gelöst. Bevorzugte Varianten sind den Unteransprüchen, der Beschreibung und den Zeichnungen zu entnehmen.

Erfindungsgemäß weist die Arbeitsmaschine eine Anordnung zur dynamischen Anpassung der Drehzahl und/oder des Drehmomentes der Zapfwelle auf. Die Anordnung umfaßt eine elektrische Maschine und ein Getriebe. Das Getriebe summiert die Antriebskraft des Verbrennungsmotors und der elektrischen Maschine.

Diese Möglichkeit einer dynamischen Anpassung der Drehzahl und/oder des Drehmoments der Zapfwelle bringt erhebliche Vorteil gegenüber herkömmlichen Arbeitsmaschinen, bei denen die Zapfwelle rein mechanisch mit dem Verbrennungsmotor verbunden ist. Bei der erfindungsgemäßen Arbeitsmaschine ist es möglich, die Zapfwelle flexibel mit einer unterschiedlichen Drehzahl und/oder mit unterschiedlichen Drehmomenten zu betreiben, die nicht starr an den Verbrennungsmotor gekoppelt sind. Dadurch werden Einschränkungen bei Schaltvorgängen vermieden.

Weiterhin ermöglicht die erfindungsgemäße Konstruktion Freiheiten bei der Auslegung des Antriebsstranges. Durch die größere Unabhängigkeit der Drehzahl und/oder des Drehmoments der Zapfwelle vom Verbrennungsmotor kann der Nebenantrieb mit den für den Antriebsstrang optimalen Bedingungen betrieben werden. Gleichzeitig kann die vom Verbrennungsmotor angetriebene Hauptmaschine im optimalen Betriebsmodus gefahren werden.

Erfindungsgemäß wird ein magnetisches Summiergetriebe zur dynamischen Anpassung der Drehzahl und des Drehmomentes der Zapfwelle eingesetzt. Solche magnetischen Summiergetriebe sind prinzipiell beispielsweise aus der DE 10 2013 021 224 A1 bekannt. Der Einsatz eines magnetischen Summiergetriebes zur dynamischen Anpassung der Drehzahl und der Drehmoments der Zapfwelle hat beispielsweise gegenüber dem Einsatz von mechanischen Summiergetrieben große Vorteile. So müssen mechanische Überlagerungsgetriebe sehr hohe Übersetzungsverhältnisse erreichen und zusätzlich Sicherheitseinrichtungen zum Schutz vor Überdrehzahl implementiert werden, was einen sehr hohen konstruktiven Aufwand und somit hohe Kosten nach sich zieht.

Ein magnetisches Zapfwellengetriebe kann in einer Stufe hohe Übersetzungsverhältnisse realisieren und weist eine inhärente Sicherheit gegen Überbelastung auf.

Bei dem erfindungsgemäßen Zapfwellengetriebe sind vorzugsweise mindestens zwei Getriebeelemente magnetisch miteinander gekoppelt. Bei einer besonders vorteilhaften Variante der Erfindung ist ein drittes Getriebeelement ebenfalls mit zumindest einem der beiden anderen Getriebeelemente magnetisch gekoppelt.

Eine Übertragung eines Moments zwischen den Getriebeelementen erfolgt über magnetische Felder. Dabei wird durch eine Rotation eines Getriebeelements ein rotierendes Magnetfeld erzeugt, welches dann eine Kraftwirkung auf ein anderes Getriebeelement ausübt. Eine Übertragung eines Moments innerhalb des Summiergetriebes erfolgt kontaktfrei.

Bei einer Variante der Erfindung ist das erste Getriebeelement ein Innenring. Es umfaßt Magnetelemente die vorzugsweise als Permanentmagnete ausgebildet sind. Diese sind vorzugsweise in einem rechten Winkel zu der Hauptrotationsachse des Zapfwellengetriebes ausgerichtet.

Als besonders günstig erweist es sich, wenn das zweite Getriebeelement als ein Mittelring ausgebildet ist. Dabei umschließt das erste, als Innenring ausgebildete Getriebeelement. Das zweite Getriebeelement umfaßt magnetisch leitende Elemente und magnetisch nichtleitende Elemente, die jeweils abwechselnd angeordnet sind.

Bei einer vorteilhaften Variante der Erfindung ist das dritte Getriebeelement als ein Außenring ausgebildet. Das als Außenring ausgebildete Getriebeelement ist radial außerhalb des als Mittelring ausgebildeten zweiten Getriebeelements angeordnet. Das dritte Getriebeelement umfaßt Magnetelemente, die in einer Radialrichtung ausgerichtet sind.

Das magnetische Zapfwellengetriebe weist somit ein erstes Eingangsgetriebeelement zur Anbindung des Verbrennungsmotors, ein zweites Eingangsgetriebeelement zur Anbindung der elektrische Maschine und ein Ausgangsgetriebeelement zum Antrieb der Zapfwelle auf. Vorzugsweise steht das Ausgangsgetriebeelement mit einer Zapfwellenkupplung in Verbindung.

Vorzugsweise ist die elektrische Maschine so ausgestaltet, dass sie sowohl als Motor als auch als Generator betrieben werden kann.

Bei einer bevorzugten Variante der Erfindung ist die elektrische Maschine in das magnetische Zapfwellensummiergetriebe zumindest teilweise integriert. Dabei kann die elektrische Maschine unmittelbar um einen Außenring des magnetischen Zapfwellengetriebes angeordnet sein.

Vorzugsweise wird bei der Anordnung, die zum Betrieb der elektrischen Maschine nötige Energie in einem elektrischen Generator erzeugt und ohne Zwischenspeicher an die elektrische Maschine geleitet.

Prinzipiell ist es auch denkbar, dass der Generator und die elektrische Maschine mit wenigstens einem Energiespeicher verbunden sind. Durch das Verbinden könnte der Generator den Energiespeicher aufladen und elektrische Energie für eine spätere Verwendung speichern. In einem Betriebsmodus, in dem nur eine geringe elektrische Leistung im Abtrieb benötigt wird, könnte die elektrische Leistung einen Akkumulator oder eine Batterie geleitet werden. Diese stünde dann für einen späteren Abruf bei Leistungsbedarf zur Verfügung.

Bei einer Variante der Erfindung weist die Anordnung eine Bremsvorrichtung für die Zapfwelle auf. Diese ermöglicht eine Festsetzung der Zapfwelle, wenn keine Leistung abgegriffen wird. Auf diese Weise ermöglicht die erfindungsgemäße Konstruktion die Erzeugung zusätzlicher elektrischer Leistung mit der elektrischen Maschine.

Die landwirtschaftliche Arbeitsmaschine umfaßt vorzugsweise eine Einrichtung, die dazu eingerichtet ist, die dynamische Anpassung der Drehzahl und des Drehmomentes der Zapfwelle zu steuern und/oder zu regeln. Dadurch können die übertragenen Drehzahlen und/oder Drehmomente variiert werden, wenn es beispielsweise zu Änderungen am Hauptantrieb und/oder am Antriebsstrang kommt. Die Einrichtung kann beispielsweise die Relativdrehzahl einzelner Komponenten des magnetischen Zapfwellensummiergetriebes regeln. So kann das Summierverhältnis von elektrischer und mechanischer Leistung eingestellt werden. Durch die Einrichtung kann die Leistungsverteilung gezielt geregelt werden. Es ist somit möglich, eine flexible Leistungsverteilung zu realisieren, die an den aktuellen Lastfall angepaßt ist. Dies kann beispielsweise durch Einstellung der Relativdrehzahlen des magnetischen Zapfwellensummiergetriebes erfolgen.

Weitere Merkmale und Vorteile der Erfindung ergeben sich aus der Beschreibung eines Ausführungsbeispiels anhand von Figuren und aus den Figuren selbst.

Dabei zeigt
- Figur 1: eine schematische Darstellung einer landwirtschaftlichen Arbeitsmaschine,
- Figur 2: eine schematische Darstellung eines Antriebsstrangs der Arbeitsmaschine,
- Figur 3: eine schematische Darstellung des Zapfwellengetriebes,
- Figur 4: ein Flußdiagramm zum Betrieb der Arbeitsmaschine.

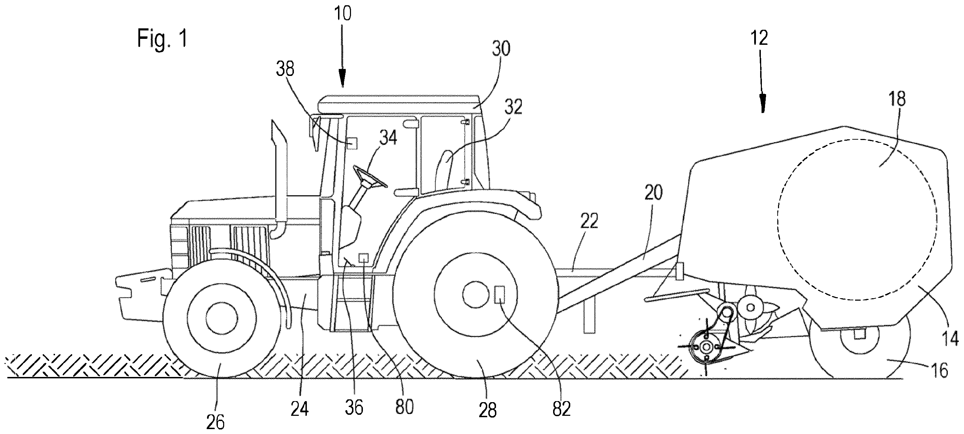

Die Figur 1 zeigt eine landwirtschaftliche Arbeitsmaschine in Form eines Traktors 10 und einer vom Traktor 10 gezogenen Rundballenpresse 12. Die Rundballenpresse 12 ist an sich konventionell und umfaßt ein auf Rädern 16 abgestütztes Fahrgestell 14 mit einer Ballenbildungskammer 18. Die Rundballenpresse 12 wird durch eine Deichsel 20 vom Traktor 10 gezogen und ihre antreibbaren Elemente werden mittels einer Zapfwelle 22 vom Traktor 10 angetrieben.

Der Traktor 10 umfaßt ein Fahrgestell 24, das sich auf vorderen, lenkbaren Rädern 26 und rückwärtigen, angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerschnittstelle 38 mit einer Anzeigeeinrichtung und Tasten und/oder der berührungsempfindlichen Anzeigeeinrichtung betätigbar.

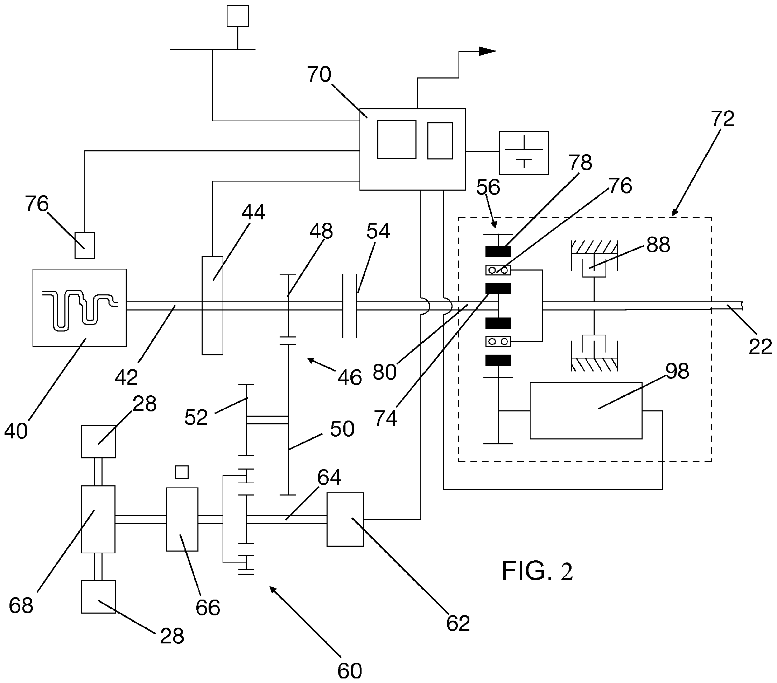

Figur 2 zeigt den Antriebsstrang der Arbeitsmaschine 10. Die Kurbelwelle eines in der Regel als Dieselmotor ausgeführten Verbrennungsmotors 40 treibt eine Welle 42 an, die ihrerseits einen elektrischen Generator 44, ein Zwischengetriebe 46 mit Zahnrädern 48, 50 und 52 sowie die Eingangsseite einer Zapfwellentrennkupplung 54 antreibt.

Die Zapfwellentrennkupplung 54 ist ausgangsseitig mit dem Eingang eines Zapfwellengetriebes 56 verbunden. Bei der erfindungsgemäßen Vorrichtung ist es möglich, dass das Zapfwellengetriebe 56 unmittelbar, ohne Zwischenschaltung einer weiteren Zapfwellenkupplung, die Zapfwelle 22 antreibt.

Das Zwischengetriebe 46 ist ausgangsseitig mit einem mechanischen Summiergetriebe 60 verbunden, das in Form eines Planetengetriebes realisiert ist, dessen Ringrad mit dem Ausgangszahnrad 52 des Zwischengetriebes 46 kämmt und dessen Sonnenrad mit der Ausgangswelle 64 eines Elektromotors 62 verbunden sind. Der Planetenradträger ist mit der Eingangsseite eines Schaltgetriebes 66 gekoppelt, das ausgangsseitig über ein Differentialgetriebe 68 die hinteren Räder 28 antreibt.

Bei einer anderen, nicht dargestellten, Ausführungsform kann das Zapfwellengetriebe 56 im Antriebsstrang auch stromab des Summiergetriebes 60 angetrieben werden. Außerdem kann das Schaltgetriebe 66 als Lastschaltgetriebe ausgeführt sein. Bei noch einer anderen, ebenfalls nicht dargestellten Ausführungsform können Summiergetriebe 60 den einzelnen Rädern 28 und ggf. auch den vorderen Rädern 26 zugeordnet werden. Bei einer weiteren Ausführungsform könnte der Elektromotor 62 sein Drehmoment direkt oder über ein Getriebe auf die Welle 42 oder eine andere Stelle des Antriebsstrang übertragen, d.h. das Summiergetriebe 60 könnte dann entfallen und der Elektromotor 62 könnte die Aufgaben des Generators 44 mit übernehmen.

Weiterhin weist die Arbeitsmaschine eine Einrichtung 70 auf. Diese umfaßt im Ausführungsbeispiel einen Sensor zur Erfassung der Drehzahl der Zapfwelle 22.

Erfindungsgemäß weist die Arbeitsmaschine 10 eine Anordnung 72 zur dynamischen Anpassung der Drehzahl und/oder des Drehmomentes der Zapfwelle 22 auf. Die Anordnung umfaßt mindestens eine elektrische Maschine 98 und ein Zapfwellengetriebe 56, das die Antriebskraft des Verbrennungsmotors 40 und von mindestens einer elektrischen Maschine 98 summiert. Erfindungsgemäß ist das Zapfwellengetriebe 56 als magnetisches Getriebe ausgeführt. Im Ausführungsbeispiel weist die Anordnung 72 eine Bremsvorrichtung 88 für die Zapfwelle 22 auf.

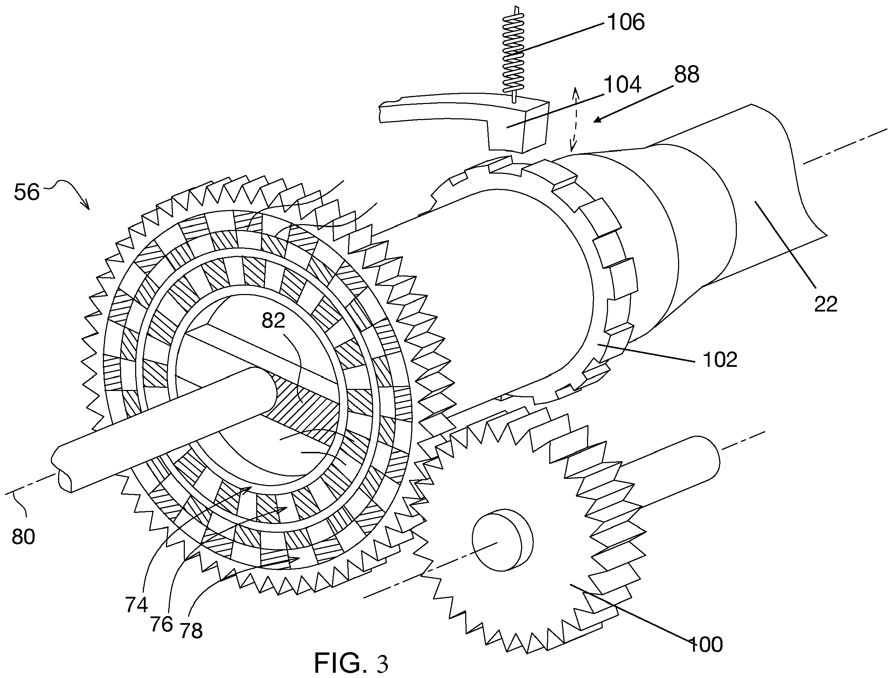

Figur 3 zeigt eine schematische Darstellung des magnetischen Zapfwellengetriebes 56. Das Zapfwellengetriebe 56 umfaßt ein erstes Getriebeelement 74, ein zweites Getriebeelement 76 und ein drittes Getriebelement 78, die magnetisch miteinander gekoppelt sind. Eine Übertragung eines Moments zwischen den Getriebeelementen 74, 76 und 78 erfolgt über magnetische Felder. Dabei wird durch eine Rotation eines Getriebeelements 74, 76, 78 ein rotierendes Magnetfeld erzeugt, welches dann eine Kraftwirkung auf ein anderes Getriebeelement 74, 76, 78 ausübt. Eine Übertragung eines Moments innerhalb des magnetischen Zapfwellengetriebes 56 erfolgt kontaktfrei.

Das erste Getriebeelement 74 ist als ein Innenring ausgebildet. Das Getriebeelement 74 ist koaxial zu einer Hauptrotationsachse 80 des magnetischen Zapfwellengetriebes 56 angeordnet. Das erste, als Innenring ausgebildete Getriebeelement 74 umfaßt ein Magnetelement 82. Das Magnetelement 82 ist im Ausführungsbeispiel als ein Permanentmagnet ausgebildet, vorzugsweise als Stabmagnet. Das Magnetelement 82 ist in einem rechten Winkel zu der Hauptrotationsachse 80 ausgerichtet. Das Magnetelement 82 weist einen Nordpol und einen Südpol auf. Dabei ist der Nordpol an einem radialen Ende des Magnetelements und der Südpol an einem gegenüberliegenden radialen Ende angeordnet.

Das zweite Getriebeelement 76 ist als Mittelring ausgebildet und umschließt das erste, als Innenring ausgebildete Getriebeelement 74 in einer Umfangsrichtung komplett.

Das zweite Getriebeelement 76 umfaßt magnetisch leitende Elemente und magnetisch nichtleitende Elemente. Die magnetisch leitenden Elemente und die magnetisch nichtleitenden Elemente sind abwechselnd angeordnet. Die magnetisch leitenden Elemente und die magnetisch nichtleitenden Elemente sind fest miteinander verbunden.

Das dritte Getriebeelement 78 ist als ein Außenring ausgebildet. Das Getriebeelement 78 ist radial außerhalb des als Mittelring ausgebildeten zweiten Getriebeelements 76 angeordnet. Das dritte Getriebeelement 78 umfaßt Magnetelemente. Die Magnetelemente sind in das als Außenring ausgebildete Getriebeelement 78 fest integriert.

Die Magnetelemente sind über die gesamten 360 Grad des ringförmig ausgebildeten Getriebeelements verteilt und in einer Radialrichtung ausgerichtet. Dabei liegen ein Nordpol und ein Südpol eines Magnetelements jeweils in einer imaginären Achse, die von der Hauptrotationsachse 80 aus radial nach außen verläuft.

Eine Polarisierung zweier benachbarter Magnetelemente des dritten Getriebeelements 78 ist komplementär ausgeführt, so dass der Nordpol des einen Magnetelements radial nach innen in Richtung der Hauptrotationsachse gerichtet, und der Nordpol des in Umfangsrichtung benachbarten Magnetelements radial nach außen von der Hauptrotationsachse weggerichtet ist.

Äquivalent dazu ist dann der Südpol des einen Magnetelements radial nach außen von der Hauptrotationsachse weggerichtet und der Südpol des in Umfangsrichtung benachbarten Magnetelements ist radial nach innen in Richtung der Hauptrotationsachse gerichtet. Dabei sind alle Magnetelemente des dritten Getriebeelements 78 umgekehrt polarisiert zu dem benachbarten Magnetelemente angeordnet.

Die Magnetelemente des als Außenring ausgebildeten, dritten Getriebeelements 78 können als Permanentmagnete ausgebildet sein. Bei dieser Variante weist das magnetische Zapfwellengetriebe 78 eine feste Übersetzung auf.

Bei einer bevorzugten Variante der Erfindung, die nicht in den Figuren dargestellt ist, sind die Magnetelemente als steuerbare Magnetspulen ausgebildet, so dass das magnetische Zapfwellengetriebe 56 durch eine spezielle Ansteuerung eine variable Übersetzung ausbilden kann und somit eine stufenlose Variation möglich ist.

Die Leistung des Verbrennungsmotors 40 wird über das innere Getriebeelement 74 in das Zapfwellengetriebe 56 eingekoppelt. Als Ausgangselement, das die Leistung auf die Zapfwelle 22 überträgt, dient im Ausführungsbeispiel das mittlere Getriebeelement 76. Im Ausführungsbeispiel ist das magnetische Zapfwellengetriebe 56 über das äußere Getriebeelement 78 mittels eines Zahnrades 100 mit der elektrischen Maschine 98 gekoppelt.

Die Bremseinrichtung 88 für die Zapfwelle 22 verfügt über einen Ring 102 der um die Zapfwelle 22 angeordnet ist und drehfest mit der Zapfwelle verbunden ist. Der Ring 102 weist Aussparungen auf. In die Aussparungen kann zum Bremsen der Zapfwelle 22 ein Element 104 eingreifen. Über ein Bauteil 106 kann die Bremse betätig und/oder gelöst werden.

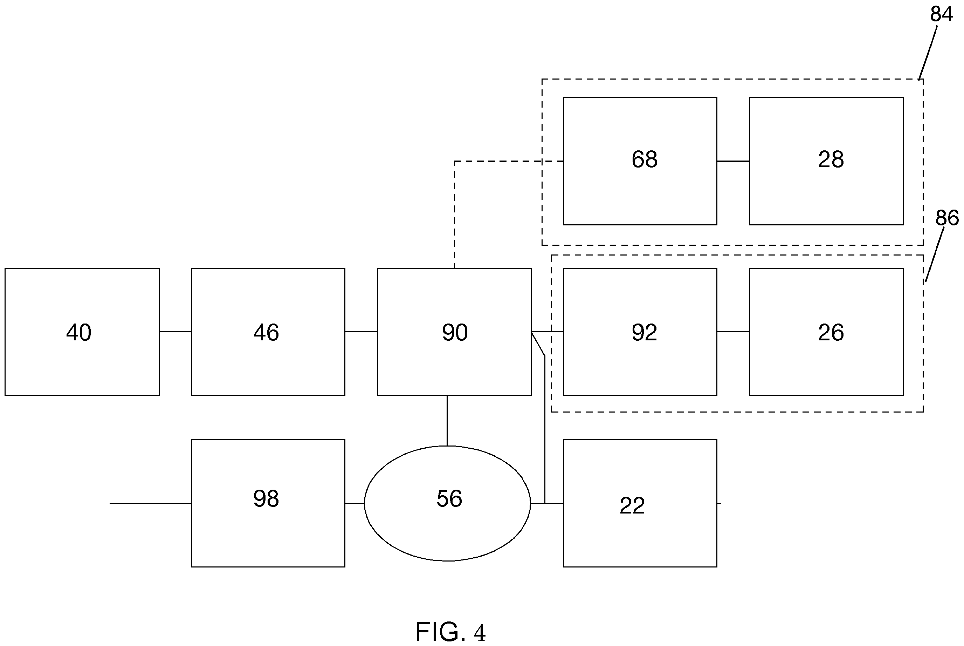

Figur 4 zeigt Fließschema zum Betrieb der Arbeitsmaschine 10.

Eine Vorderachse 84 und eine Hinterachse 86 der als Traktor ausgebildeten Arbeitsmaschine 10, können über einen mechanischen Leistungspfad angetrieben werden. Dabei wird die mechanisch erzeugte Leistung eines Verbrennungsmotors 40 mittels eines Schalt-/Automatikgetriebes 46 einer mechanischen Stufe 90 und dann einem Vorderachsdifferential 92 und/oder einem Hinterachsdifferential 68 zugeleitet. Die mechanische Stufe 90 ist vorzugsweise als Zahnradstufe ausgebildet.

Das Getriebe 46 dient dazu, die Leistung bezüglich Drehmoment bzw. Drehzahl an den Bedarfsfall anzupassen. Durch eine mechanische Stufe 90 kann die mechanisch erzeugte Leistung des Verbrennungsmotors auf einen Vorderachs- und/oder Hinterachsantrieb aufgeteilt werden.

Der Antrieb der Hinterachse weist im Ausführungsbeispiel ein Hinterachsdifferential 68 auf, an das die Abtriebsmittel der Hinterachse angeschlossen sind. Dabei können die Abtriebsmittel aus einem Differentialgetriebe, einem Planetengetriebe oder einem Umlaufrädergetriebe bestehen, und dienen dazu, die Drehzahl und/oder das Drehmoment nochmals zu modifizieren, bevor es an die Räder geleitet wird.

Erfindungsgemäß kann die Zapfwelle 22 des Nebenantriebs mit einem mechanischen und/oder einem elektrischen Pfad mit Leistung beaufschlagt werden. Der Leistungspfad für die Zapfwelle 22 weist erfindungsgemäß ein magnetisches Summiergetriebe 56 auf, das die Leistung des mechanischen und des elektrischen Pfads bündelt und an die Zapfwelle 22 leitet.

Die elektrische Maschine 98 ist mit dem magnetischen Zapfwellengetriebe 56 verbunden. In dem magnetischen Zapfwellengetriebe 56 wird der mechanische Leistungspfad mit dem elektrischen Leistungspfad addiert und an die Zapfwelle 22 geleitet.

Durch die Anordnung 72 zur dynamischen Anpassung der Drehzahl und/oder des Drehmoments der Zapfwelle 22 ist es möglich, je nach Bedarfsfall zusätzlich die Leistung aus dem elektrischen Pfad zu dosieren. Die elektrische Maschine 98 wird durch die 70 Einrichtung gesteuert, so dass die elektrische Maschine 98 durch ihren elektrischen Antrieb das magnetische Zapfwellengetriebe 56 derart beeinflussen kann, dass die Leistung bedarfsgerecht summiert wird. Je nach Drehzahl- bzw. Drehmomentbedarf der kann der Faktor der Summierung bestimmt werden.

Die Einrichtung 70 zur Steuerung und/oder Regelung kann auch dazu verwendet werden, einen Generator zu steuern, so dass dieser je nach Bedarfsfall zu bzw. abgeschaltet werden kann.

Durch den elektrischen Leistungspfad kann mit Hilfe der Einrichtung 70 zur Steuerung und/oder Regelung im Bedarfsfall zusätzliche elektrische Leistung auf die Zapfwelle 22 geleitet werden. Der elektrische Leistungspfad führt nicht über das Getriebe 46, so dass dieses durch die summierte Leistung nicht belastet wird.

## Patentansprüche

1. Landwirtschaftliche Arbeitsmaschine (10) mit einem Verbrennungsmotor (40) und einem Nebenabtrieb, umfassend
mindestens eine Zapfwelle (22),
eine Anordnung (72) zur dynamischen Anpassung der Drehzahl und/oder des Drehmomentes der Zapfwelle (22),
wobei die Anordnung (72) eine elektrische Maschine (98) und ein Getriebe (56) umfaßt, das die Antriebskraft des Verbrennungsmotors (40) und der elektrischen Maschine (98) summiert, und
das Getriebe (56) mindestens zwei Getriebeelemente (74, 76, 78) aufweist, die magnetisch gekoppelt sind.

2. Landwirtschaftliche Arbeitsmaschine nach Anspruch 1,
**dadurch gekennzeichnet, dass** das Getriebe (56) ein erstes Getriebeelement zur Anbindung des Verbrennungsmotors (40), ein zweites Getriebeelement zur Anbindung der elektrische Maschine (98) und ein drittes Getriebeelement zum Antrieb der Zapfwelle (22) umfaßt.

3. Landwirtschaftliches Fahrzeug nach Anspruch 2,
**dadurch gekennzeichnet, dass** das dritte Getriebeelement mit einer Zapfwellenkupplung in Verbindung steht.

4. Landwirtschaftliche Arbeitsmaschine nach einem der Ansprüche 1 bis 3,
**dadurch gekennzeichnet, dass** die elektrische Maschine (98) in das Getriebe (56) zumindest teilweise integriert ist.

5. Landwirtschaftliche Arbeitsmaschine nach einem der Ansprüche 2 bis 4,
**dadurch gekennzeichnet, dass** ein Getriebeelement (74) als Innenring, ein Getriebeelement (76) als Außenring und ein Getriebeelement (78) als Mittelring ausgebildet ist, wobei die Getriebeelemente (74, 76, 78) jeweils magnetisch miteinander gekoppelt sind.

6. Landwirtschaftliche Arbeitsmaschine nach Anspruch 5,
**dadurch gekennzeichnet, dass** die elektrische Maschine (98) unmittelbar um den Außenring angeordnet ist.

7. Landwirtschaftliche Arbeitsmaschine nach Anspruch 5 oder 6,
**dadurch gekennzeichnet, dass** das als Außenring ausgebildete Getriebeelement (78) Magnetelemente aufweist.

8. Landwirtschaftliche Arbeitsmaschine nach einem der Ansprüche 5 bis 7,
**dadurch gekennzeichnet, dass** das als Außenring ausgebildete Getriebeelement (78) ein magnetisches Feld mit Spulen erzeugt.

9. Landwirtschaftliche Arbeitsmaschine nach einem der Ansprüche 1 bis 8,
**dadurch gekennzeichnet, dass** die Anordnung (72) eine Bremsvorrichtung (88) für die Zapfwelle (22) aufweist.

10. Landwirtschaftliche Arbeitsmaschine nach einem der Ansprüche 1 bis 9,
**dadurch gekennzeichnet, dass** die Anordnung (72), einen Generator umfaßt, der die zum Betrieb der elektrischen Maschine (98) nötige Energie erzeugt und ohne Zwischenspeicher an die elektrische Maschine (98) leitet.

11. Landwirtschaftliche Arbeitsmaschine nach einem der Ansprüche 1 bis 10,
**dadurch gekennzeichnet, dass** die Arbeitsmaschine (10) eine Einrichtung (70) aufweist, die dazu eingerichtet ist, die dynamische Anpassung der Drehzahl und des Drehmomentes der Zapfwelle (22) zu steuern und/oder zu regeln.

12. Landwirtschaftliche Arbeitsmaschine nach einen der Ansprüche 1 bis 11,
wobei die elektrische Maschine (98) dazu eingerichtet ist, als Generator und als Motor betrieben zu werden.

13. Verwendung eines magnetischen Getriebes mit einem Zapfwellengetriebe (56) zur dynamischen Anpassung der Drehzahl und des Drehmomentes einer Zapfwelle (22) bei einer landwirtschaftlichen Arbeitsmaschine (10), wobei das Getriebe (56) mindestens zwei Getriebeelemente (74, 76, 78) aufweist, die magnetisch gekoppelt sind.

14. Zapfwellengetriebe, zum Übertragen von Antriebsmoment an eine Zapfwelle, wobei das Zapfwellengetriebe aufweist,
eine Anordnung (72) zur dynamischen Anpassung von Drehzahl und/oder Drehmoment der Zapfwelle,
mit einer elektrischen Maschine (98), die an ein elektrisches Netz anschließbar ist, mindestens drei Getriebelemente (74, 76, 78), wobei ein Getriebeelement ausgelegt ist, mit einer Eingangsstufe verbunden zu werden und ein weiteres Getriebeelement mit der elektrischen Maschine verbunden ist, so dass die dritte Getriebestufe eingeleitetes Drehmoment aufsummiert , wobei das Getriebe (56) mindestens zwei Getriebeelemente (74, 76, 78) aufweist, die magnetisch gekoppelt sind.
